# FASCICULE DE BREVET EUROPEEN

(11) **EP 2 223 630 B1**
(45) Date de publication et mention de la délivrance du brevet: **20.02.2013**
(21) Numéro de dépôt: 09300005.7
(22) Date de dépôt: 27.02.2009
(51) Int. Cl.: A47B 13/00, A47B 13/06, F16B 12/22, A47B 21/06

(54) **Table possédant un système de positionnement et de verrouillage d'un plateau sur un cadre**
Tisch, der mit einem Positionier- und Verriegelungssystem einer Platte auf einem Rahmen ausgestattet ist
Table with a system for positioning and locking a plate on a frame

(43) Date de publication de la demande: 01.09.2010
(73) Titulaire: STEELCASE SA, 67300 Schiltigheim (FR)
(72) Inventeur: Flanet, Daniel, 67300 Schiltigheim (FR)
(74) Mandataire: Littolff, Denis

(56) Documents cités:
- FR-A1- 2 636 822
- US-A- 4 317 416
- US-A- 5 738 462
- US-A- 6 004 065

## Description

La présente invention relève du domaine du mobilier, et notamment du mobilier de bureau. Elle concerne plus spécifiquement un système de positionnement et de fixation d'un plateau formant plan de travail à un cadre support intégrant classiquement des piétements, en vue de constituer de manière simple et rapide, notamment sans être obligé de recourir à des outils, une table utilisable en particulier comme bureau.

L'invention trouve donc application au stade du montage proprement dit des tables. Dans le domaine du mobilier de bureau, les quantités de meubles à installer peuvent être parfois conséquentes, justifiant une recherche de mécanismes d'assemblage rapides, intuitifs et sans outils pour assurer le positionnement et le verrouillage mutuels des éléments constitutifs des meubles. En l'occurrence, il s'agit de plus d'éléments dont l'encombrement implique un montage au moins partiel sur site, qu'il est préférable de faciliter autant que possible.

Parmi les multiples solutions mécaniques traditionnelles utilisées pour assurer le guidage/positionnement/verrouillage de composants de meubles entre eux, les systèmes de type boutonnière offrent un certains nombres d'avantages intéressants dans le contexte envisagé d'abord parce qu'ils assurent une double fonction de fixation et de guidage, et ensuite parce qu'ils sont particulièrement adaptés lorsque des surfaces planes d'allure horizontales sont à mettre en contact au cours du montage en vue d'une fixation dans une direction perpendiculaire auxdites surfaces. Pour mémoire, un système de type boutonnière est composé de deux éléments :
- un téton cylindrique positionné sur une des surfaces planes, par exemple la face inférieure du plateau,
- un orifice à forme spécifique de guidage en translation pour le téton réalisé dans l'autre des surfaces planes à mettre en contact, par exemple la face supérieure d'une semelle de piétement.

Lorsqu'un plateau est positionné sur deux semelles grâce à au moins deux boutonnières ou équivalents assurant un guidage par exemple selon la direction des semelles en vue d'un positionnement final de l'un par rapport à l'autre, il est correctement positionné et verrouillé selon les deux axes autres que la direction mentionnée. En d'autres termes, il est immobilisé dans une direction perpendiculaire aux surfaces planes en contact, ce qui est le but premier, et dans une direction perpendiculaire à l'axe longitudinal de la semelle, qui est d'ailleurs en l'espèce aussi celui des boutonnières. Ce double verrouillage s'effectue sans effort, par guidage du téton dans l'orifice, du fait du contact gravitaire des deux surfaces planes qui peuvent glisser l'une sur l'autre, ce qui constitue un avantage certain de ce type de liaison pour ce genre d'applications.

En revanche, ce mode d'assemblage ne gère pas la fixation dans la direction de l'axe des semelles ou des boutonnières, en vue d'achever le verrouillage de la liaison mécanique de sorte qu'il n'y ait plus de degré de liberté du plateau par rapport au cadre.

L'invention vise donc à compléter l'action des boutonnières en vue de remédier à l'insuffisance mentionnée auparavant.

A cet effet, la table de l'invention, utilisée en particulier comme bureau et comprenant classiquement :
- au moins deux piétements composés chacun d'un fût, d'une base reposant sur le sol et d'une semelle supérieure,
- une traverse horizontale reliant les semelles et formant un cadre avec les piétements,
- un plateau horizontal positionné sur le cadre,
- au moins un système de type boutonnière par piétement, composé d'un orifice allongé réalisé dans la face supérieure de la semelle et d'un téton placé sur la face inférieure du plateau, permettant le positionnement final du plateau par rapport au cadre et son verrouillage dans des directions perpendiculaires respectivement au plan de contact de la semelle/plateau et à l'axe longitudinal de la semelle,
- un élément de verrouillage permettant de verrouiller le plateau par rapport au cadre dans la direction de l'axe de la boutonnière.

Un tel système se monte et se démonte aisément et sans efforts ou presque.

Selon l'invention, cet élément de verrouillage consiste en un organe flexible venant se clipser élastiquement dans un orifice lors du déplacement en translation du plateau sur les semelles guidé par les boutonnières, comme cela est divulgué dans le document US 6 004 065.

Selon l'invention, l'organe flexible est prévu solidaire du plateau, et l'orifice est alors pratiqué dans le cadre. Les composants mâles des liaisons mécaniques (tétons, organe flexibles) sont solidaires du plateau alors que les parties femelles (boutonnières, orifices) sont prévues du côté du cadre support.

Selon l'invention, l'organe élastique dans une configuration alternative à celle présentée dans le document US 6 004 065, prend la forme d'une lamelle en V à sommet arrondi dont une première branche, solidaire du plateau, comporte une première butée dans la direction d'insertion et la seconde branche est libre et comporte une seconde butée d'orientation inverse à la première en vue du verrouillage de la lamelle en V dans l'orifice, ledit orifice étant pratiqué dans une paroi plane du cadre servant d'appui pour les butées, la branche libre se prolongeant après la butée de verrouillage par une portion externe ressortant de l'orifice.

Cette configuration de l'organe flexible lui donne un effet ressort dans une direction parallèle au plan de l'orifice, permettant de le maintenir verrouillé en position insérée, la portion externe de la branche libre étant prévue pour déverrouiller et retirer la lamelle de l'orifice.

De préférence, la butée de verrouillage consiste en un épaulement pratiqué dans la branche libre de la lamelle, et qui vient au contact ou au voisinage immédiat de la périphérie interne de l'orifice lorsque l'insertion de la lamelle est terminée, c'est à dire lorsque la butée d'insertion est au contact de la surface périphérique externe de l'orifice. La distance axiale entre les deux butées correspond donc sensiblement à l'épaisseur de la paroi dans laquelle est pratiqué l'orifice.

On a mentionné ci-dessus le caractère solidaire de la liaison de la première branche de l'organe flexible au plateau. La solidarisation s'effectue en pratique via un support fixé au plateau qui relie la lamelle flexible à ce dernier, support prévu en forme de U présentant deux parois latérales dont les chants frontaux constituent la première butée, la première branche de la lamelle flexible étant solidarisée audit support au voisinage de la base du U et desdits chants frontaux, la portion externe de la branche libre se trouvant alors positionnée sensiblement parallèlement à ladite base et au voisinage des bords libres des parois latérales.

En vue de faciliter le guidage lors de l'insertion de la lamelle flexible dans l'orifice du cadre, la base du support en U se prolonge par un pan se développant parallèlement à la lamelle flexible et doté d'une surface plane en regard de ladite lamelle. Ce pan est prévu pour se placer, lors de l'insertion de la lamelle flexible dans l'orifice, en appui plan contre une paroi du cadre d'allure perpendiculaire à celle qui comporte ledit orifice. Le guidage se fait par simple glissement l'une sur l'autre de ces surfaces planes, et permet de plus un pré-positionnement de la lamelle par rapport à l'orifice avant insertion, puis un accompagnement du mouvement d'insertion lors du déplacement translatif conduisant au verrouillage.

Le positionnement et le verrouillage du plateau sur le cadre impliquent évidemment que ce dernier présente une bonne rigidité. A cet effet, selon l'invention, le cadre est doté d'une équerre de renfort fixée respectivement aux extrémités de la traverse et au piétement, et présentant une paroi supérieure parallèle et au même niveau que la surface supérieure des semelles et une seconde paroi d'allure parallèle à la traverse.

Plus précisément, selon une possibilité, l'orifice d'insertion de l'organe flexible est réalisé dans la paroi parallèle à la traverse de cette équerre et au voisinage de paroi supérieure, sur laquelle s'appuie le pan prolongeant la base du support de l'organe flexible.

De préférence, la traverse est fixée à l'équerre en ménageant un espace entre son côté supérieur et la paroi supérieure de l'équerre, l'orifice de fixation de l'organe flexible débouchant dans cet espace. L'intérêt de cette configuration est de simplifier la fabrication et l'assemblage de ces pièces, en n'obligeant pas à percer des orifices identiques dans deux pièces puis à les fixer l'une à l'autre en respectant la correspondance/l'alignement entre lesdits orifices.

L'équerre de renfort est positionnée sur le fût du piétement par un crochet inférieur et une languette supérieure prévus pour s'insérer dans des fentes pratiquées dans une face de ce fût. L'objectif de simplification pour l'assemblage ressort également de cette configuration, puisqu'il suffit de positionner le crochet inférieur et de faire pivoter l'équerre au contact du fût pour que la languette supérieure soit correctement positionnée et s'insère naturellement dans la fente qui lui correspond.

La fixation de l'équerre au piétement s'effectue ensuite au niveau et par l'intermédiaire de la semelle, laquelle est elle-même solidarisée au fût. Cette fixation s'effectue au moyen d'une excroissance dépassant de la paroi supérieure de l'équerre en direction de la semelle et présentant un trou fileté, qui s'insère dans une fente pratiquée dans un côté latéral de la semelle de sorte que l'orifice de ladite excroissance soit placé en regard de et coaxial à un orifice pratiqué dans la paroi supérieure de la semelle.

La fixation définitive est ensuite finalisée par une unique vis, verrouillant en un seul point la liaison préparée par les appuis précédents. Montage et démontage sont rapides et aisés du fait de l'accessibilité de la vis par le haut de la semelle.

Additionnellement, l'une des parois latérales du support de la lamelle flexible peut comporter une excroissance unciforme ouverte vers le haut dépassant dudit support du côté opposé à la lamelle, utilisée en particulier pour simplifier la gestion des fils ou câbles de connexion des appareils éventuellement disposés sur le bureau, ladite excroissance étant en effet employée comme support de câble.

L'invention va à présente être décrite plus en détail, en référence aux figures annexées, par lesquelles :
- la figure 1 est une vue générale en perspective de la table ;
- la figure 2 est une vue en perspective du plateau ;
- la figure 3 est une vue en perspective du cadre ;
- les figures 4a et 4b sont des vues de l'élément de verrouillage ;
- la figure 5 est une vue en perspective de l'équerre de renfort ;
- les figures 6a et 6b sont des vues partielles de la liaison entre une équerre de renfort, la traverse horizontale et un élément de verrouillage ;
- la figure 7 est une vue en perspective de la fixation de l'équerre sur le piétement et la semelle.

Les différentes figures représentent une configuration préférentielle de l'invention, appliquée à une table utilisée en particulier comme bureau.

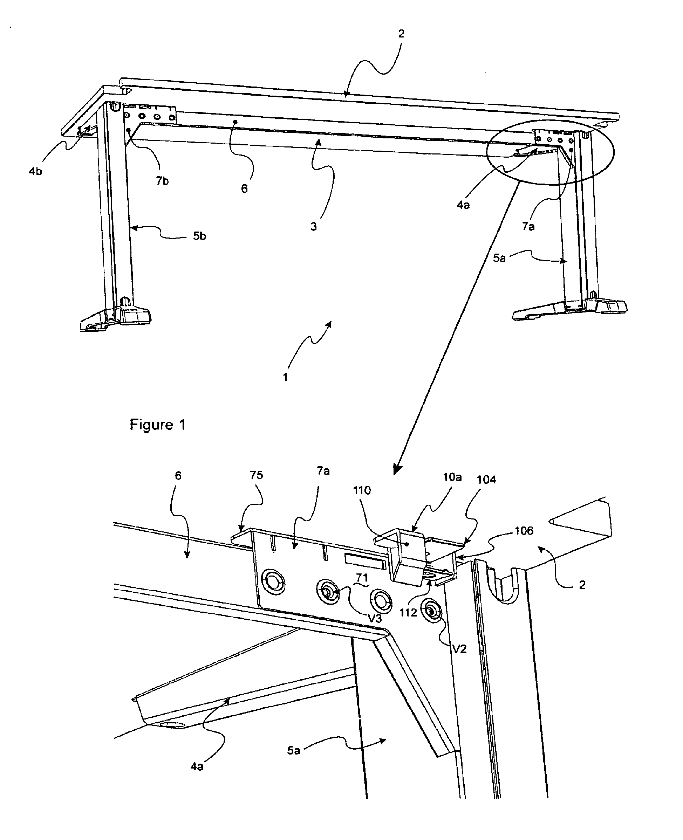

La figure 1 présente une vue générale d'une table (1) comprenant un plateau (2) placé sur un cadre (3) composé d'une part de deux piétements (5a, 5b) comportant chacun une semelle (4a, 4b) et un fût surmontant une base reposant sur le sol, et d'autre part d'une traverse horizontale (6) de stabilisation.

Des équerres de renfort (7a, 7b) sont fixées aux deux extrémités de la traverse (6) afin de renforcer la tenue mécanique du cadre (3) en le stabilisant notamment au regard des contraintes mécaniques qu'il subit. Ces équerres (7a, 7b) sont en pratique fixées d'une part aux piétements (5a, 5b) au niveau des semelles (4a, 4b) et des fûts, et d'autre part à la traverse horizontale (6). Elles participent également au positionnement d'un élément de verrouillage (10a, 10b) permettant d'achever la fixation du plateau (2) au cadre (3).

Le plateau (2) est positionné puis fixé/verrouillé au cadre (3) par deux systèmes mécaniques distincts mis en oeuvre simultanément :
- deux systèmes à boutonnière (8a, 8b, 9a, 9b) ;
- deux éléments de verrouillage axial(10a, 10b).

Ces systèmes fonctionnant de façon identique de chaque côté, les références numériques générales seront utilisées pour la suite de la description. Les lettres a et b identifient respectivement les côtés gauche et droit.

Le système de boutonnière est composé d'un téton (8) et d'un orifice (9).

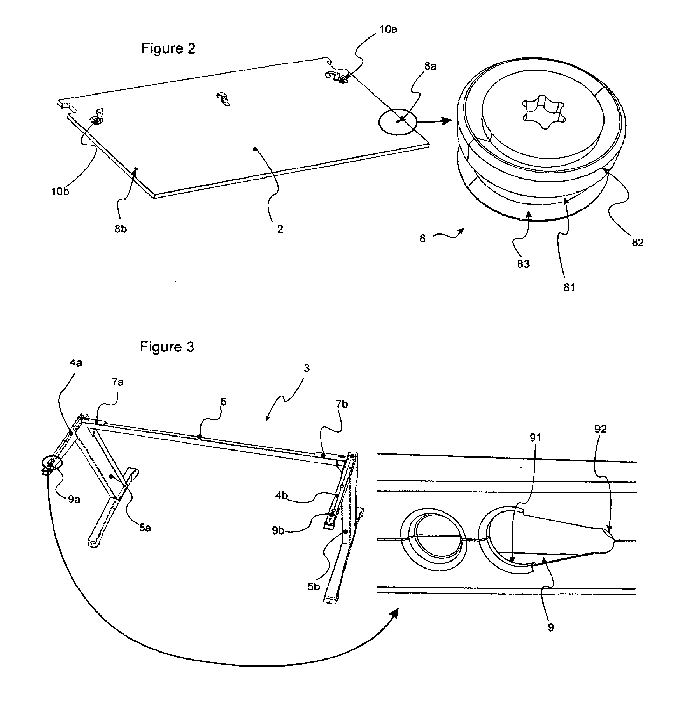

Le téton (8) est de forme cylindrique avec une partie centrale (81) de diamètre inférieur au diamètre des deux parties externes (82) et (83) (voir fig. 2). Il est destiné à être utilisé conjointement avec l'orifice de la boutonnière (9), de forme oblongue dont les deux demi-cercles extérieurs (91, 92) sont de diamètres différents (voir fig. 3) pour assurer les deux fonctions distinctes de la boutonnière (9), à savoir l'insertion et le verrouillage du téton (8).

Ainsi, plus précisément, la première partie (91) de l'orifice (9) permet le passage du téton (8), et elle présente par conséquent un diamètre supérieur au diamètre maximal dudit téton (8). Sa seconde partie (92) permet le maintien en position du téton (8), et son diamètre est par conséquent légèrement supérieur au diamètre central du téton (8), mais inférieur aux diamètres externes (82, 83).

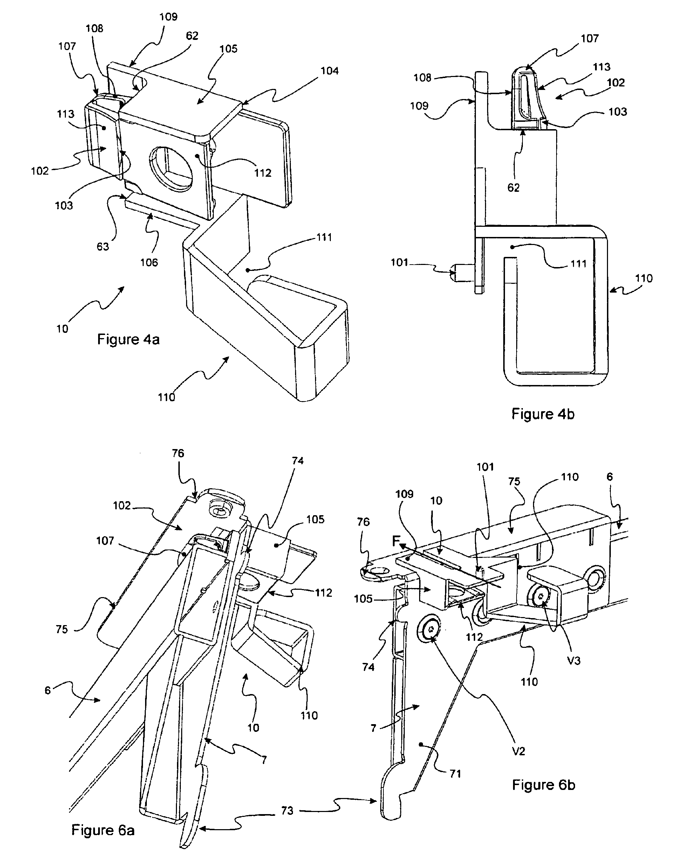

L'élément de verrouillage (10) est présenté aux figures 4a et 4b. Il est solidaire du plateau (2), et positionné par rapport à celui-ci par l'intermédiaire d'un plot (101) dépassant de l'une de ses faces. Plus précisément, cet élément de verrouillage (10) comprend un organe flexible (102) constitué d'une lamelle en V à sommet (107) arrondi repliée sur elle-même et s'évasant progressivement à partir dudit sommet (107). L'organe flexible (102) comprend une première branche (108) fixée à un support (104) en forme de U présentant deux surfaces latérales (105, 106), et une seconde branche libre (113) comportant un épaulement (103) faisant office de butée de verrouillage, comme cela sera expliqué plus en détail ci-après.

Ces surfaces latérales (105, 106 ) présentent des chants frontaux (61, 62) formant butée à l'insertion, lors du clipsage élastique de l'élément de verrouillage (10) dans le cadre (3), c'est à dire de la lamelle (102) dans l'orifice (72) dans la direction de la flèche F, soit parallèlement à l'axe des boutonnières (9). La base du support (104) se prolonge, dans la direction de la lamelle flexible (102), par un pan (109) dont la surface plane en regard de la lamelle (102) aide au guidage lors de l'insertion de cette dernière dans l'orifice (72), comme cela apparaît notamment en figure 6b.

L'une des parois latérales (106) du support (104) de la lamelle flexible (102) comporte une excroissance unciforme (110) comportant une ouverture (111) et dépassant à partir dudit support (104) du côté opposé à ladite lamelle (102), c'est à dire à l'opposé du côté de fixation au cadre (3). Cet excroissance (110) est en fait destinée à supporter des câbles de connexion électrique, et donc à faire office, notamment en combinaison avec les excroissances attachées aux autres éléments de verrouillage (10) d'une même table (1), de support de câbles.

Une portion externe (112) de la branche libre (113) est disposée sensiblement parallèlement à base du support (104) et au voisinage des bords libres des parois latérales (105, 106). Elle permet de déverrouiller la lamelle flexible (102) s'il y a lieu, par simple pression dans la direction de la base, conduisant à resserrer les branches (108, 113) et à inhiber la fonction de la butée (103) : il suffit alors de ressortir la lamelle (102) de son orifice pour déverrouiller l'élément de verrouillage (10).

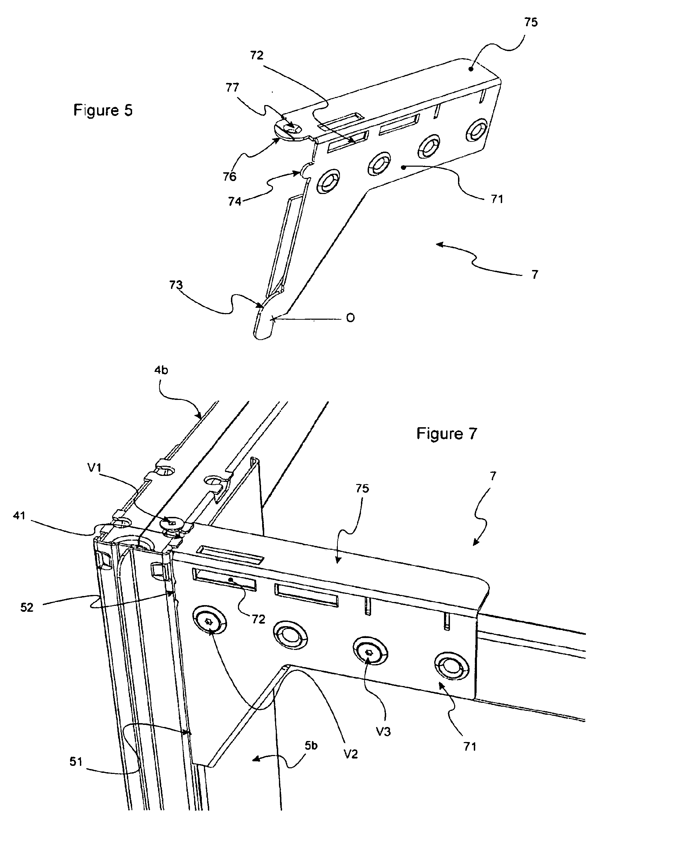

L'équerre de renfort (7) a, comme mentionné auparavant, plusieurs fonctions mécaniques dans l'exemple illustré par les figures, notamment dans les figures 5, 6b et 7, dont à titre essentiel :
- coopérer avec l'élément de verrouillage (10) pour maintenir le plateau (2) fixé au cadre (3),
- rigidifier la structure dudit cadre (3).

A ces effets, elle présente sur sa face avant (71) un orifice (72), relevant du cadre (3) puisque l'équerre est fixée à la traverse (6) et à un piétement (5a, 5b), permettant la fixation par clipsage de l'élément de verrouillage (10) par insertion élastique de la lamelle flexible (102) dans ledit orifice (72). L'épaulement (103) de l'élément de verrouillage (10) bloque la lamelle (102) contre un côté de la face (71) lorsque la branche libre (113) de cette dernière revient élastiquement en sa position initiale après la flexion engendrée par le passage dans l'orifice (72).

Pour défaire ce "clipsage", une pression inverse sur la portion (112) suffit comme on l'a vu à désengager l'épaulement (103). Cette pression peut être appliquée manuellement ou à l'aide d'un outil.

L'équerre de renfort (7) présente sur sa face avant (71) un crochet inférieur (73) et une languette supérieure (74) destinées à s'insérer dans des fentes (51, 52) du piétement (5), organisant un pivotement initial de l'équerre par rapport au piétement (5) autour du crochet (73), suivi par une insertion de la languette (74) aboutissant à positionner l'équerre complètement au contact dudit piétement (5).

Sur la face supérieure (75), au contact de laquelle le pan (109) de l'élément de verrouillage (10) est guidé pendant le clipsage de ce dernier, l'équerre (7) présente une excroissance (76) destinée à venir se loger dans un orifice (41) latéral de la semelle (4) (voir en figure 7). Au centre de cette excroissance (76) un trou fileté (77) permet la fixation par une vis (V1) fixant l'équerre (7) à la semelle (4), et par conséquent au piétement (5).

Quatre perçages sont réalisés afin de fixer l'équerre à la traverse, autorisant une possibilité de réglage en longueur. Dans l'exemple, seuls deux d'entre eux sont utilisés par des vis (V2, V3) (voir fig. 7).

Le montage de la table se fait progressivement d'abord par assemblage du cadre (3) à partir des piétements (5) (y compris les semelles) et de la traverse (6), fixés à l'aide des équerres (7), puis par mise en place du plateau (2) sur ledit cadre (3).

La pose du plateau (2) s'effectue de la manière suivante :
- insertion des tétons (8) dans les orifices (93) des boutonnières (9) ;
- déplacement du plateau (2) selon l'axe de ces boutonnières (9) en butée dans les orifices (92), ce qui aboutit dans le même temps à clipser l'organe flexible (102) de l'élément de verrouillage (10) dans l'orifice (72) de l'équerre (7) du cadre (3), achevant de verrouiller la fixation du plateau (2) sur le cadre (3) selon les trois axes.

L'invention précédente a été décrite au moyen d'un exemple préférentiel, qui ne peut toutefois être considéré comme limitatif. Les variantes et les modifications de forme qui entrent dans le contenu englobé par les revendications annexées font partie de l'invention.

## Revendications

1. Table (1) utilisée en particulier comme bureau comprenant :
- au moins deux piétements (5) composés chacun d'un fût, d'une base reposant sur le sol et d'une semelle (4) supérieure,
- une traverse horizontale (6) reliant les semelles (4) et formant un cadre (3) avec les piétements (5),
- un plateau horizontal (2) positionné sur le cadre (3),
- au moins un système de type boutonnière par piétement, composé d'un orifice (9) allongé réalisé dans la face supérieure de la semelle (4) et d'un téton (8) placé sur la face inférieure du plateau (2), permettant le positionnement final du plateau (2) par rapport au cadre (3) et son verrouillage dans des directions perpendiculaires respectivement au plan de contact de la semelle (4)/plateau (2) et à l'axe longitudinal de la semelle (4),
- un élément de verrouillage (10) permettant de verrouiller le plateau (2) par rapport au cadre (3) dans la direction de l'axe de la boutonnière (9), et consistant en un organe flexible (102) solidaire du plateau (2) qui vient se clipser élastiquement dans un orifice (72) pratiqué dans le cadre (3) lors du déplacement en translation du plateau (2) sur les semelles (4) guidé par les boutonnières (9),
**caractérisée en ce que** l'organe flexible est constitué d'une lamelle (102) en V à sommet (107) arrondi dont une première branche (108), solidaire du plateau (2), comporte une première butée (62, 63) dans la direction d'insertion et la seconde branche (113) est libre et comporte une seconde butée (103) d'orientation inverse à la première en vue du verrouillage de la lamelle (102) en V dans l'orifice (72), ledit orifice (72) étant pratiqué dans une paroi (71) plane du cadre servant d'appui pour les butées (62, 63, 103), la branche libre (113) se prolongeant après la butée de verrouillage (103) par une portion externe (112) ressortant de l'orifice (72).

2. Table (1) utilisée en particulier comme bureau selon la revendication précédente, **caractérisée en ce que** la butée de verrouillage consiste en un épaulement (103) pratiqué dans la branche libre (113) de la lamelle (102).

3. Table (1) utilisée en particulier comme bureau selon l'une quelconque des revendications précédentes, **caractérisée en ce que** l'organe flexible (102) est solidarisé à un support (104) en forme de U fixé au plateau (2) et présentant deux parois latérales (105, 106) dont les chants frontaux (62, 63) constituent la première butée, la première branche (108) de la lamelle flexible (102) étant solidarisée audit support (104) au voisinage de la base du U et desdits chants frontaux (62, 63), la portion externe (112) de la branche libre (113) étant disposée sensiblement parallèlement à ladite base et au voisinage des bords libres des parois latérales (105, 106).

4. Table (1) utilisée en particulier comme bureau selon la revendication précédente, **caractérisée en ce que** la base du support (104) en U se prolonge par un pan (109) se développant parallèlement à la lamelle flexible (102) et doté d'une surface plane en regard de ladite lamelle (102).

5. Table (1) utilisée en particulier comme bureau selon l'une quelconque des revendications précédentes, **caractérisée en ce que** le cadre présente une équerre de renfort (7) fixée respectivement aux extrémités de la traverse (6) et au piétement (5), et présentant une paroi supérieure (75) parallèle et au même niveau que la surface supérieure des semelles (4) et une seconde paroi (71) d'allure parallèle à la traverse (6).

6. Table (1) utilisée en particulier comme bureau selon la revendication précédente, **caractérisée en ce que** l'orifice (72) d'insertion de l'organe flexible (102) est réalisé dans la paroi (71) parallèle à la traverse (6) de l'équerre (7) et au voisinage de la paroi supérieure (75) sur laquelle s'appuie le pan (109) prolongeant la base du support (104) de l'organe flexible (102).

7. Table (1) utilisée en particulier comme bureau selon l'une des revendications 5 et 6, **caractérisée en ce que** la traverse (6) est fixée à l'équerre en ménageant un espace entre son côté supérieur et la paroi supérieure (75) de l'équerre, l'orifice (72) de fixation de l'organe flexible (102) débouchant dans cet espace.

8. Table (1) utilisée en particulier comme bureau selon l'une des revendications 5 à 7, **caractérisée en ce que** l'équerre de renfort (7) est positionnée sur le fût du piétement (5) par un crochet inférieur (73) et une languette supérieure (74) prévus pour s'insérer dans des fentes (51, 52) pratiquées dans une face dudit fût.

9. Table (1) utilisée en particulier comme bureau selon l'une des revendications 5 à 8, **caractérisée en ce qu'**une excroissance (76) dépassant de l'équerre (7) en direction de la semelle et présentant un trou (77) fileté, qui s'insère dans une fente pratiquée dans un côté latéral de la semelle (4) de sorte que l'orifice (77) de l'excroissance (76) soit placé en regard de et coaxial à un orifice (41) pratiqué dans la paroi supérieure de la semelle (4).

10. Table (1) utilisée en particulier comme bureau selon l'une des revendications 3 à 9, **caractérisée en ce que** l'une des parois latérales (106) du support (104) de la lamelle flexible (102) comporte une excroissance unciforme (110) ouverte vers le haut dépassant dudit support (104) du côté opposé à la lamelle (102).

## Claims

1. A table (1) used in particular as a desk, comprising:
- at least two underframes (5), each made up of a frame, a base resting on the ground, and an upper base plate (4),
- a horizontal crosspiece (6) connecting the base plates (4) and forming a frame (3) with the underframes (5),
- a horizontal plate (2) positioned on the frame (3),
- at least one system of the underframe buttonhole type, made up of an elongated opening (9) formed in the upper surface of the base plate (4) and a dowel (8) placed on the lower surface of the plate (2), allowing the final positioning of the plate (2) relative to the frame (3) and the locking thereof in directions respectively perpendicular to the contact plane of the base plate (4)/plate (2) and the longitudinal axis of the base plate (4),
- a locking element (10) making it possible to lock the plate (2) relative to the frame (3) in the direction of the axis of the buttonhole (9), and consisting of a flexible member (102) secured to the plate (2) that elastically clips into an opening (72) formed in the frame (3) during translation of the plate (2) on the base plates (4) guided by the buttonholes (9),
**characterized in that** the flexible member is made up of a V-shaped strip (102) with a rounded apex (107) whereof a first branch (108), secured to the plate (2), has a first stop (62, 63) in the insertion direction and the second branch (113) is free and has a second stop (103) with an orientation opposite the first for locking of the V-shaped strip (102) in the opening (72), said opening (72) being formed in a planar wall (71) of the frame serving as a bearing for the stops (62, 63, 103), the free branch (113) extending after the locking stop (103) by an end portion (112) coming out of the opening (72).

2. The table (1), in particular used as a desk, according to the preceding claim, **characterized in that** the locking stop consists of a shoulder (103) formed in the free branch (113) of the strip (102).

3. The table (1), in particular used as a desk, according to any one of the preceding claims, **characterized in that** the flexible member (102) is secured to a U-shaped support (104) fastened to the plate (2) and having two side walls (105, 106), the front edges (62, 63) of which make up the first stop, the first branch (108) of the flexible strip (102) being secured to said support (104) in the vicinity of the U-shaped base and said front edges (62, 63), the outer portion (112) of the free branch (113) being arranged substantially parallel to said base into the vicinity of the free edges of the side walls (105, 106).

4. The table (1), in particular used as a desk, according to the preceding claims, **characterized in that** the base of the U-shaped support (104) is extended by a face (109) developing parallel to the flexible strip (102) and equipped with a planar surface across from said strip (102).

5. The table (1), in particular used as a desk, according to any one of the preceding claims, **characterized in that** the frame has a brace (7) respectively fastened to the ends of the crosspiece (6) and the underframe (5), and having an upper wall (75) parallel to and at the same level as the upper surface of the base plates (4) and a second wall (71) parallel to the crosspiece (6).

6. The table (1), in particular used as a desk, according to the preceding claim, **characterized in that** the opening (72) for inserting the flexible member (102) is formed in the wall (71) parallel to the crosspiece (6) of the brace (7) and in the vicinity of the upper wall (75) on which the face (109) extending the base of the support (104) of the flexible member (102) bears.

7. The table (1), in particular used as a desk, according to one of claims 5 and 6, **characterized in that** the crosspiece (6) is fastened to the brace while forming a space between its upper side and the upper wall (75) of the brace, the opening (72) for fastening the flexible member (102) emerging **in that** space.

8. The table (1), in particular used as a desk, according to one of claims 5 to 7, **characterized in that** the brace (7) is positioned on the frame of the underframe (5) by a lower hook (73) and an upper tongue (74) which are provided to be inserted into slits (51, 52) formed in one surface of said frame.

9. The table (1), in particular used as a desk, according to one of claims 5 to 8, **characterized in that** a protuberance (76) protruding from the brace (7) toward the base plate and having a threaded hole (77), which is inserted into a slit formed in a lateral side of the base plate (4) such that the opening (77) of the protuberance (76) is placed across from and coaxial to an opening (41) formed in the upper wall of the base plate (4).

10. The table (1), in particular used as a desk, according to one of claims 3 to 9, **characterized in that** one of the side walls (106) of the support (104) of the flexible strip (102) has an unciform protuberance (110) upwardly open protruding past said support (104) on the side opposite the strip (102).

## Patentansprüche

1. Tisch (1), der insbesondere als Schreibtisch benutzt wird, der umfasst:
- mindestens zwei Tischgestelle (5), die jeweils aus einem Schaft, einer auf dem Boden ruhenden Basis und einer oberen Sohle (4) zusammengesetzt sind,
- einen horizontalen Querträger (6), der die Sohlen (4) verbindet und mit den Tischgestellen (5) einen Rahmen (3) bildet,
- eine auf dem Rahmen (3) positionierte horizontale Platte (2),
- mindestens ein System vom Typ Knopfloch je Tischgestell, das aus einer länglichen Öffnung (9), die in die obere Fläche der Sohle (4) eingearbeitet ist, und einem Zapfen (8), der auf der unteren Fläche der Platte (2) platziert ist, besteht, das die endgültige Positionierung der Platte (2) im Verhältnis zum Rahmen (3) und ihre Verriegelung in senkrechte Richtungen jeweils zur Kontaktebene der Sohle (4)/Platte (2) und zur Längsachse der Sohle (4) erlaubt,
- ein Verriegelungselement (10), das es erlaubt, die Platte (2) im Verhältnis zum Rahmen (3) in Richtung der Achse des Knopflochs (9) zu verriegeln, und aus einem flexiblen Organ (102) besteht, das mit der Platte (2) verbunden ist, das bei der verschiebenden Verlagerung der Platte (2) auf den Sohlen (4), geführt durch die Knopflöcher (9), elastisch in eine Öffnung (72) einrastet, die in den Rahmen (3) eingearbeitet ist,
**dadurch gekennzeichnet, dass** das flexible Organ aus einer V-förmigen Lamelle (102) mit abgerundeter Spitze (107) besteht, von der ein erster Arm (108), der mit der Platte (2) verbunden ist, einen ersten Anschlag (62, 63) in Rastrichtung aufweist und der zweite Arm (113) frei ist und einen im Hinblick auf die Verriegelung der V-förmigen Lamelle (102) in der Öffnung (72) zum ersten Anschlag umgekehrt ausgerichteten zweiten Anschlag (103) aufweist, wobei die Öffnung (72) in eine ebene Wand (71) des Rahmens eingearbeitet ist, die für die Anschläge (62, 63, 103) als Stütze dient, wobei sich der freie Arm (113) nach dem Verriegelungsanschlag (103) anhand eines externen Abschnitts (112), der aus der Öffnung (72) hervorgeht, verlängert.

2. Tisch (1), der insbesondere als Schreibtisch benutzt wird, nach vorangehendem Anspruch, **dadurch gekennzeichnet, dass** der Verriegelungsanschlag aus einem Absatz (103) besteht, der in den freien Arm (113) der Lamelle (102) eingearbeitet ist.

3. Tisch (1), der insbesondere als Schreibtisch benutzt wird, nach einem der vorangehenden Ansprüche, **dadurch gekennzeichnet, dass** das flexible Organ (102) mit einer U-förmigen Unterlage (104) verbunden ist, die auf der Platte (2) befestigt ist und zwei Seitenwände (105, 106) aufweist, deren frontale Schmalseiten (62, 63) den ersten Anschlag bilden, wobei der erste Arm (108) der flexiblen Lamelle (102) mit der Unterlage (104) in der Nähe der Basis des U und der frontalen Schmalseiten (62, 63) verbunden ist, wobei der externe Abschnitt (112) des freien Arms (113) etwa parallel zur Basis und in der Nähe der freien Ränder der Seitenwände (105, 106) angeordnet ist.

4. Tisch (1), der insbesondere als Schreibtisch benutzt wird, nach vorangehendem Anspruch, **dadurch gekennzeichnet, dass** sich die Basis der U-förmigen Unterlage (104) anhand einer Kante (109) verlängert, die sich parallel zur flexiblen Lamelle (102) erstreckt und mit einer ebenen Fläche gegenüber der Lamelle (102) versehen ist.

5. Tisch (1), der insbesondere als Schreibtisch benutzt wird, nach einem der vorangehenden Ansprüche, **dadurch gekennzeichnet, dass** der Rahmen einen Verstärkungswinkel (7) aufweist, der jeweils an den Enden des Querträgers (6) und am Tischgestell (5) befestigt ist und eine obere Wand (75) aufweist, die parallel und auf derselben Ebene wie die obere Fläche der Sohlen (4) ist und eine zweite Wand (71) parallel zum Querträger (6).

6. Tisch (1), der insbesondere als Schreibtisch benutzt wird, nach vorangehendem Anspruch, **dadurch gekennzeichnet, dass** die Rastöffnung (72) des flexiblen Organs (102) in die Wand (71) parallel zum Querträger (6) des Winkels (7) und in der Nähe der oberen Wand (75) eingearbeitet ist, auf der sich die Kante (109) abstützt, die die Basis der Unterlage (104) des flexiblen Organs (102) verlängert.

7. Tisch (1), der insbesondere als Schreibtisch benutzt wird, nach einem der Ansprüche 5 und 6, **dadurch gekennzeichnet, dass** der Querträger (6) an dem Winkel befestigt ist, indem ein Raum zwischen seiner oberen Seite und der oberen Wand (75) des Winkels ausgebildet wird, wobei die Befestigungsöffnung (72) des flexiblen Organs (102) in diesen Raum mündet.

8. Tisch (1), der insbesondere als Schreibtisch benutzt wird, nach einem der Ansprüche 5 bis 7, **dadurch gekennzeichnet, dass** der Verstärkungswinkel (7) auf dem Schaft des Tischgestells (5) anhand eines unteren Hakens (73) und einer oberen Zunge (74) positioniert ist, die vorgesehen sind, um in Schlitze (51, 52) zu rasten, die in eine Seite des Schafts eingearbeitet sind.

9. Tisch (1), der insbesondere als Schreibtisch benutzt wird, nach einem der Ansprüche 5 bis 8, **dadurch gekennzeichnet, dass** eine Ausstülpung (76), die über den Winkel (7) in Richtung der Sohle hinausreicht und ein Loch (77) mit Gewinde aufweist, derart in einen Schlitz (41) rastet, der in eine seitliche Seite der Sohle (4) eingearbeitet ist, dass die Öffnung (77) der Ausstülpung (76) gegenüber und koaxial zu einer Öffnung (41) platziert ist, die in die obere Wand der Sohle (4) eingearbeitet ist.

10. Tisch (1), der insbesondere als Schreibtisch benutzt wird, nach einem der Ansprüche 3 bis 9, **dadurch gekennzeichnet, dass** eine der seitlichen Wände (106) der Unterlage (104) der flexiblen Zunge (110) eine nach oben offene hakenförmige Ausstülpung (110) aufweist, die die Unterlage (104) auf der der Lamelle (102) gegenüberliegenden Seite überragt.
